(19) Europäisches Patentamt

European Patent Office

Office européen des brevets

(11) Veröffentlichungsnummer: **0 358 072 B1**

(12) **EUROPÄISCHE PATENTSCHRIFT**

(45) Veröffentlichungstag der Patentschrift: **02.12.92**

(51) Int. Cl.5: **A01N 51/00**

(21) Anmeldenummer: **89115798.4**

(22) Anmeldetag: **26.08.89**

(54) **Bekämpfung von Algen oder Flechten.**

(30) Priorität: **03.09.88 DE 3830011**

(43) Veröffentlichungstag der Anmeldung:
**14.03.90 Patentblatt 90/11**

(45) Bekanntmachung des Hinweises auf die
Patenterteilung:
**02.12.92 Patentblatt 92/49**

(84) Benannte Vertragsstaaten:
**AT BE CH DE ES FR GB GR IT LI NL SE**

(56) Entgegenhaltungen:
**EP-A- 0 072 426**
**FR-A- 1 188 542**
**FR-A- 2 202 649**
**FR-A- 2 237 736**
**FR-A- 2 248 123**

(73) Patentinhaber: **DR. WOLMAN GMBH**
**Dr.-Wolman-Strasse 31-33 Postfach 11 60**
**W-7573 Sinzheim(DE)**

(72) Erfinder: **Heidenreich, Hans-Peter**
**Heiligensteinstrasse 3**
**W-7570 Baden-Baden 23(DE)**
Erfinder: **Marx, Hans-Norbert**
**5 Tuerkenlouisstrasse**
**W-7580 Buehl-Vimbuch(DE)**
Erfinder: **Stanek, Richard, Dr.**
**Wuermersheimer Strasse 35**
**W-7552 Durmersheim(DE)**

(74) Vertreter: **Schweiss, Werner, Dr. et al**
**BASF Aktiengesellschaft Patentabteilung**
**Carl-Bosch-Strasse 38**
**W-6700 Ludwigshafen(DE)**

EP 0 358 072 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein Verfahren zur Bekämpfung von Algen, Flechten oder Unterwasserorganismen.

Es ist bekannt, N-Cyclohexyldiazeniumdioxy-Metallsalze, insbesondere das Aluminiumsalz oder das Kupfersalz als Holzschutzmittel zur Bekämpfung von Pilzen im Holz zu verwenden (DE 10 24 743).

Diese Holzschutzmittel haben den Nachteil, daß sie gegen holzverfärbende Pilze (Ascomyceten), Bakterien im Holz und das Holz besiedelnde Insekten (Käfer) nur schlecht wirksam sind.

Es ist ferner bekannt, bei Flachdächern Dachdichtungsbahnen aus organischen Polymeren zu verwenden, die der direkten Bewitterung ausgesetzt sind, durch Algen oder Flechten besiedelt werden und die dadurch, beispielsweise bei Rotalgenbefall, undicht werden,

Es ist ferner bekannt, daß in Wasser lebende Organismen, z.B. Insekten, Mollusken (Weichtiere, z.B, Schnecken oder Muscheln), Crustaceen, Krustentiere z.B. Krebse, Acsidien z.B. Seescheiden, Bryozoen zB. Moostierchen und Unkraut auf Gegenständen, die sich unter Wasser (z.B. Seewasser) befinden, aufwachsen, z.B. auf Schiffsrümpfen, Fischernetzen, Piers, Unterwasserkabeln, Ein- und Auslaßrohren für Wasser, z.B. Kühlmittelleitungen. Sie werden bekanntlich mit Antifoulingmitteln, z.B. Antifoulingfarben, bekämpft. Zu diesem Zweck werden anorganische Schwermetallverbindungen, wie Kupfer(I)- oder Quecksilberoxid, sowie metallorganische Verbindungen, wie Zinn- oder Arsen-organische Verbindungen, verwendet. Diese Verbindungen sind jedoch toxikologisch nicht unbedenklich. Z.B. in U.S.A. wurde deshalb die Auswaschrate der bioziden Wirkstoffe auf einen Wert von max. 168 $\mu$g/ft$^2$ pro 14 Tage begrenzt. Auch werden organische Halogenverbindungen, wie 1,2,3,4,5,6-Hexachlorcyclohexan und 1,1,1-Trichlor-2,2-bis(p-chlorphenyl)-ethan (DDT), eingesetzt. Diese halogenhaltigen Verbindungen haben den Nachteil, daß sie nur schwer abgebaut werden können und sich deshalb in den im Wasser lebenden Organismen kumulieren (anreichern) können. Deshalb besteht ein Bedarf an Antifoulingmitteln, die gegen im Waser lebende Organismen ausreichend wirksam sind, gegenüber Säugetieren eine sehr niedrige Toxizität aufweisen und sicher zu handhaben sind.

Ein weiterer Bedarf an hochwirksamen und umweltfreundlichen Antibewuchsmitteln ist im Bereich der wärmegedämmten Fassaden von Gebäuden entstanden. Sie bieten, insbesondere in Gegenden mit hoher Luftfeuchtigkeit, ideale Wuchsbedingungen für Algen, Flechten und andere Mikroorganismen, was relativ schnell zu einem Befall der Fassaden mit diesen Lebewesen führen kann.

Es wurde nun gefunden, daß N-Cyclohexyldiazeniumdioxy-Amin- oder Metallsalze (HDO-Salze) oder eine Mischung dieser Salze zur Bekämpfung von Algen, Flechten oder Organismen, die sich unter Wasser oder in feuchter Luft auf festen Gegenständen ansiedeln, sehr gut geeignet sind. Sie können beispielsweise in Mitteln zur Bekämpfung dieser Lebewesen enthalten sein. Diese Mittel enthalten nach dem Trocknen (in der Trockensubstanz) z.B. 0,1 bis 30 Gew.%, insbesondere 1 bis 15 Gew.%, an dem Wirkstoff. Die Mittel können zusätzlich auch noch einen weiteren bekannten bioziden Wirkstoff enthalten.

Aminsalze sind z.B. die Salze von Ammoniak, Tri-($C_{1-4}$)-alkylamin, z.B. Trimethylamin, oder Tri-$C_{1-4}$-Alkanolamine, z.B. Triethanolamin, oder Salze von stickstoffhaltigen 6-Ring-Heterocyclen mit einem Stickstoffatom im Ring, z.B. Morpholin oder N-Tridecyl-2,6-dimethylmorpholin (Tridemorph). Unter den Metallsalzen zeigt das Kupfersalz eine besonders ausgeprägte gute Wirkung. Weiterhin können z.B. die Aluminium-, Magnesium-, Zink- und Zinnsalze oder ihre Mischungen verwendet werden.

Die Anwendung erfolgt z.B. in der Weise, daß die Wirkstoffe beispielsweise zum Schutz organischer Polymere direkt in die Kunststoffmatrix eingearbeitet werden, wie z.B. im Fall von extrudierten oder kalandrierten Dachdichtungsbahnen oder sie werden als biozide Komponenten z.B. den flüssigen oder pastösen Farben, Putzen, Kitten oder Spachtelmassen zugemischt, die als Mittel gegen den Bewuchs verwendet werden sollen.

Je nach den Anforderungen der einzelnen Verwendungsgebiete können die HDO-Salze in wäßrige Formulierungen (Dispersionsfarben, -putze, -spachteln, Emulsionspräparate) oder auch in organische Lösemittel enthaltende Zubereitungen (z.B. Antifoulingfarben) eingearbeitet werden.

Im Vergleich zu den bekannten als Antibewuchsmittel verwendeten bioziden Wirkstoffen (vorwiegend auf Basis von zinnorganischen Verbindungen) zeichnen sich die neuen Mittel insbesondere durch ihre bessere toxikologische Verträglichkeit und damit Umweltfreundlichkeit aus.

Die Verwendungsmöglichkeiten der neuen Mittel sollen anhand der nachfolgenden Anwendungsbeispiele erläutert werden.

Beispiel 1 - Bewuchshemmendes Mittel für den Dachbereich

Aus Polyisobutylen-Granulat, das mit unterschiedlichen Mengen der Wirkstoffe versetzt war, wurden 1 mm starke und 50 cm breite Folien extrudiert.

Die Folien wurden künstlich aufgerauht und als 2 m lange Musterabschnitte auf einem Flachdach verlegt, wo durch hohen Baumbewuchs und einen in der Nähe befindlichen Ventilationsschacht einer Großküche, besonders günstige Vegetationsbedingungen (hohe Luftfeuchtigkeit, Schatten) für einen Bewuchs auf dem Dach vorhanden sind.

Nach 2-jähriger Verweilzeit wurden die Folien im Spätherbst ausgebaut und der Algenbefall nach einer 4-stufigen Bewertungsskala (0 = kein Befall, 1 = gering, 2 = mittel, 3 = stark befallen) beurteilt.

| Nr. | Wirkstoffgehalt in der Folie | Rotalgen | Andere |
|-----|------------------------------|----------|--------|
| 1 | ohne | 3 | 3 |
| 2 | 3 Gew.% Cu $(HDO)_2$ | 0 | 1 |
| 3 | 2 Gew.% Cu $(HDO)_2$ + 1 Gew.% $Sn(HDO)_4$ | 0 | 0 |
| 4 | 3 Gew.% Sn $(HDO)_4$ | 1 | 1 |
| 5 | 2 Gew.% Sn $(HDO)_4$ + 1 Gew.% $Cu(HDO)_2$ | 0 | 0 |

Beispiel 2 - Antifoulingwirkung

50 x 50 cm große Musterplatten aus 3 mm starkem glasfaserverstärktem Polyesterharz wurden mit jeweils 250 $g/m^2$ einer handelsüblichen Chlorkautschukfarbe, die mit verschiedenen Wirkstoffmengen versetzt war, gestrichen und für 4 Monate (Mai - August) in der Meeresbucht von Rabac an der Ostküste von Istrien (Jugoslawien, Mittelmeer) versenkt.

Bei der Auswertung wurde der Bewuchs mit Acsidien, Bryozoen und Algen nach einer 4-stufigen Bewertungsskala (0 = kein Bewuchs, 1 = gering, 2 = mittel und 3 = stark bewachsen) beurteilt.

Als bekannter Vergleichswirkstoff wurde TBTF (Tributylzinnfluorid) in den Testversuch einbezogen.

| Nr. | Naßauftrag 250 g Farbe/$m^2$ | Acsidien | Bryozoen | Algen |
|-----|------------------------------|----------|----------|-------|
| 1 | ohne | 3 | 3 | 3 |
| 2 | ohne | 2 | 3 | 3 |
| 3 | + 5 Gew.% $Cu(HDO)_2$ | 1 | 0 | 1 |
| 4 | + 5 Gew.% $Al(HDO)_3$ | 1 | 1 | 1 |
| 5 | + 5 Gew.% $Sn(HDO)_4$ | 2 | 1 | 1 |
| 6 | + 10 Gew.% $Cu(HDO)_2$ | 0 | 0 | 0 |
| 7 | + 10 Gew.% $Al(HDO)_3$ | 1 | 0 | 0 |
| 8 | + 10 Gew.% $Sn(HDO)_4$ | 0 | 0 | 0 |
| 9 | + 5 Gew.% $Cu(HDO)_2$ + 5 Gew.% $Al(HDO)_3$ | 0 | 0 | 0 |
| 10 | + 5 Gew.% Triethanolamin-HDO | 0 | 1 | 0 |
| 11 | + 10 Gew.% Triethanolamin-HDO | 0 | 1 | 0 |
| 12 | + 5 Gew.% TBTF | 0 | 0 | 1 |
| 13 | + 10 Gew.% TBTF | 0 | 0 | 0 |

Die Wirkung der HDO-Salze ist etwa so gut wie die der bekannten Zinnverbindung, ohne daß die HDO-Salze toxikologisch so bedenklich sind wie die Zinnverbindung.

Beispiel 3 - Bewuchshemmende Mittel für den Fassadenbereich an Häusern

Als Testobjekt diente ein zweistöckiges Wohnhaus, dessen Nord-West-Fasade einen sehr starken Algenbefall aufwies und nur im Randbereich durch Fenster unterbrochen war. Das Wohnhaus war Mitte der siebziger Jahre (etwa 1975) mit einem auf aufgeschäumtem Polystyrol basierenden Wärmedämmverbundsystem versehen worden. Die äußere Beschichtung bestand aus einem Rollputz auf Basis einer Dispersion mit organischen Polymeren, der mit den üblichen Konservierungsmitteln für die Dispersion ausgerüstet war. Nach Angaben des Hausbesitzers zeigten sich schon nach zwei Jahren Anzeichen eines beginnenden Algenbefalls.

Im Rahmen der Sanierung der Fassade wurden die befallenen Stellen mit Chlorbleichlösung (NaOCl-Lösung) vorbehandelt und danach mit Dampfstrahlen gesäubert. Anschließend wurden drei Seiten des Hauses mit einer Fassadenfarbe gestrichen, die 2 Gew.% eines handelsüblichen bekannten Algizids auf Basis Tetrabrom-o-Kresol enthielt.

An der Nordwestfassade dagegen wurde eine Testfläche von 5,2 x 7 m ausgespart, die in 18 gleich große (2 m hoch, 1 m breit) Einzelfelder aufgeteilt wurde.

Für die Beschichtung der einzelnen Felder wurde die Fassadenfarbe mit unterschiedlichen Wirkstoffen gemischt und auf jeweils zwei getrennt liegende Einzelfelder aufgebracht.

Die bewuchshemmende Wirkung der einzelnen Wirkstoffe wurde nach zwei, drei und vier Jahren bewertet.

Grundlage dafür war eine 4-stufige Bewertungsskala (0 = kein Bewuchs, 1 = gering, 2 = mittel, 3 = stark bewachsen).

| Nr. | Fassadenfarbe (Styrol-Acrylat-Dispersion) | Algenbefall nach Jahren | | |
|-----|-------------------------------------------|---|---|---|
|     |                                           | 2 | 3 | 4 |
| 1 | ohne Wirkstoff | 1 | 1 | 2 |
| 2 | + 2 Gew.% eines handelsüblichen Algizids | 0 | 0 | 0 |
| 3 | + 1 Gew.% eines handelsüblichen Algizids | 0 | 0 | 1 |
| 4 | + 2 Gew.% Cu(HDO)$_2$ | 0 | 0 | 0 |
| 5 | + 1 Gew.% Cu(HDO)$_2$ | 0 | 0 | 0 |
| 6 | + 2 Gew.% Mg(HDO)$_2$ | 0 | 0 | 0 |
| 7 | + 1 Gew.% Mg(HDO)$_2$ | 0 | 0 | 1 |
| 8 | + 2 Gew.% Tridemorph - HDO | 0 | 0 | 0 |
| 9 | + 1 Gew.% Tridemorph - HDO | 0 | 0 | 1 |

**Patentansprüche**

1. Verwendung eines N-Cyclohexyldiazeniumdioxy-Amin- oder Metallsalzes oder einer Mischung dieser Salze zur Bekämpfung von Algen, Flechten oder Organismen, die sich unter Wasser oder in feuchter Luft auf festen Gegenständen ansiedeln, außer Pilzen.

2. Verfahren zur Bekämpfung von Algen, Flechten oder Organismen, die sich unter Wasser oder in feuchter Luft auf festen Gegenständen ansiedeln, dadurch gekennzeichnet, daß man die Gegenstände, die vor dem Befall durch die oben genannten Lebewesen geschützt werden sollen, mit einem N-Cyclohexyldiazeniumdioxy-Amin- oder Metallsalz oder mit einer Mischung dieser Salze behandelt.

3. Verfahren nach Anspruch 3, dadurch gekennzeichnet, daß man die Gegenstände, die vor dem Befall geschützt werden sollen, mit einem Mittel behandelt, das in der Trockensubstanz 0,1 bis 30 Gew.%, insbesondere 1 bis 15 Gew.% des Salzes oder einer Mischung der Salze enthält.

4. Verfahren nach Anspruch 3, dadurch gekennzeichnet, daß man neben dem Salz einen anderen bekannten bioziden Wirkstoff verwendet.

5. Verfahren nach Anspruch 3, dadurch gekennzeichnet, daß man 0,1 bis 30 Gew.% des Salzes oder einer Mischung der Salze in eine Folie oder Platte einarbeitet, durch welche die Oberfläche des zu schützenden Gegenstandes bedeckt wird.

**Claims**

1. Use of a N-cyclohexyldiazeniumdioxy-amine or metal salt or of a mixture of these salts for controlling algae, lichen or organisms which settle on solid articles under water or in humid air, with the exception of fungi.

2. A method for controlling algae, lichen or organisms which settle on solid articles under water or in humid air, wherein the articles which are to be protected from attack by the abovementioned life forms are treated with an N-cyclohexyldiaseniumdioxy-amine or metal salt or with a mixture of these salts.

3. Method as claimed in claim 2, wherein the articles which are to be protected from attack are treated with an agent which contains from 0.1 to 30, in particular from 1 to 15, % by weight, based on the dry substance, of the salt or of a mixture of the salts.

4. A method as claimed in claim 3, wherein another known biocidal active ingredient is used in addition to the salt.

5. A method as claimed in claim 3, wherein from 0.1 to 30% by weight of the salt or of a mixture of the salts are incorporated in a film or sheet, by means of which the surface of the article to be protected is covered.

**Revendications**

1. Utilisation d'un sel de N-cyclohexyldiazéniumdioxyamine ou -métal ou d'un mélange de ces sels pour la lutte contre les algues, les lichens ou les organismes qui forment des colonies sur des objets solides sous l'eau ou dans l'air humide, à l'exception des mycètes.

2. Procédé pour combattre les algues, les lichens ou les organismes qui forment des colonies sur les objets solides sous l'eau ou dans l'air humide, caractérisé en ce que l'on traite les objets à protéger avant l'attaque par les organismes en question, à l'aide d'un sel de N-cyclohexyldiazéniumdioxy-amine ou - métal ou d'un mélange de ces sels.

3. Procédé selon la revendication 2, caractérisé en ce que l'on traite les objets à protéger contre l'attaque par un produit contenant, en matières sèches, de 0,1 à 30 % en poids, plus spécialement de 1 à 15 % en poids du sel ou d'un mélange de sels.

4. Procédé selon la revendication 2, caractérisé en ce que, en plus du sel, on utilise une autre substance active biocide connue.

5. Procédé selon la revendication 2, caractérisé en ce que l'on incorpore de 0,1 à 30 % en poids du sel ou d'un mélange des sels dans une feuille ou une plaque à l'aide de laquelle on recouvre la surface de l'objet à protéger.